# EUROPEAN PATENT APPLICATION

(11) **EP 1 659 047 A1**
(43) Date of publication of application: **24.05.2006**
(21) Application number: 04772066.9
(22) Date of filing: 24.08.2004
(51) Int. Cl.: B62D 5/07

(54) **POWER STEERING UNIT**

(30) Priority: 29.08.2003 JP 2003306679
(71) Applicant: Koyo Seiko Co., Ltd., Osaka-shi, Osaka 542-8502 (JP)
(72) Inventor: HIRAKUSHI, Shuzo, c/o KOYO SEIKO CO., LTD., Chuo-ku, Osaka-shi Osaka 542-8502 (JP); SANO, Osamu, c/o KOYO SEIKO CO., LTD., Chuo-ku, Osaka-shi Osaka 542-8502 (JP); UOTA, Masashi, c/o KOYO SEIKO CO., LTD., Chuo-ku, Osaka-shi Osaka 542-8502 (JP); SHINTOU, Hiroaki; c/o KOYO SEIKO CO., LTD., Chuo-ku, Osaka-shi Osaka 542-8502 (JP); KOTAKE, Yoshimi, c/o KOYO SEIKO CO., LTD., Chuo-ku, Osaka-shi Osaka 542-8502 (JP)
(74) Representative: Leyh, Hans
(86) International application number: PCT/JP2004/012105
(87) International publication number: WO 2005/021357

(57) **Abstract**

A power steering unit capable of finely controlling the steering assistance power generated by a hydraulic actuator in accordance with the steering direction and driving condition without requiring a complex structure is provided at low cost.

The right steering assistance power generating state or the left steering assistance power generating state can be alternatively selected by switching the flow path of hydraulic fluid to the hydraulic actuator 10 for generating the steering assistance power with a motor-operated switching valve 23.

The switching valve 23 is controlled so that the steering assistance power acts in accordance with the determined steering direction, and an electric motor 22 for driving a pump 21 is controlled so that the pressure of the hydraulic fluid discharged from the pump 21 is varied in accordance with the determined driving condition.

## Description

### TECHNICAL FIELD

The present invention relates to a power steering unit having an electric motor which drives a pump for supplying hydraulic fluid to a hydraulic actuator for generating steering assistance power.

### BACKGROUND ART

In a conventional power steering apparatus having an electric motor which drives a pump for supplying hydraulic fluid to a hydraulic actuator for generating steering assistance power, a control valve is used to change the direction in which the steering assistance power is acting in accordance with the direction of steering, and to vary the magnitude of the steering assistance power in accordance with the steering torque, vehicle speed, and other driving conditions (refer to patent documents 1, 2, and 3).
Patent document 1: Japanese Patent Application Laid-open No. 1994-206554
Patent document 2: US Patent No. 4499964
Patent document 3: US Patent No. 6419042

### DISCLOSURE OF THE INVENTION

### PROBLEM TO BE SOLVED BY THE INVENTION

In the control valve of a conventional power steering apparatus, the degree of opening of the throttle in the flow path for hydraulic fluid is mechanically varied in accordance with the steering direction and driving conditions. Therefore, fine control of the steering assistance power is difficult, and the number of manufacturing processes and manufacturing cost increases because the mechanical structure is complex. Also, parts cannot be shared with a manual type steering apparatus, so it is difficult to reduce manufacturing cost and also to contribute the conversion of the manual type steering apparatus into a power steering apparatus. Furthermore, when the pressure in the oil chamber of the hydraulic actuator to which the hydraulic fluid is to be supplied is negative, there is a delay in the application of steering assistance power so the steering feeling reduces. An objective of the present invention is to solve the foregoing problems.

### MEANS FOR SOLVING THE PROBLEM

The power steering unit according to the present invention comprises a hydraulic actuator for generating steering assistance power, a tank for storing hydraulic fluid for the hydraulic actuator, a pump for discharging the hydraulic fluid stored in the tank, an electric motor for driving the pump, a motor-operated switching valve which switches the hydraulic fluid flow path to the actuator so that a state of generating right steering assistance power or a state of generating left steering assistance power is alternatively selected, and a controller which controls the switching valve so that the steering assistance power acts in accordance with the determined steering direction.
Furthermore, the motor is controlled by the controller so that the pressure of the hydraulic fluid discharged by the pump is varied in accordance with the determined driving condition. Alternatively, a motor-operated valve which varies the degree of opening in a hydraulic fluid flow path between the discharge side of the pump and the tank is provided, and the controller controls the motor-operated valve so that the steering assistance power is varied in accordance with the determined driving condition. Alternatively, it is desirable that both the motor and the motor-operated valve are controlled by the controller.
According to the present invention, when the steering assistance power is generated with the hydraulic actuator, the direction in which the steering assistance power is acting can be changed in accordance with the steering direction by switching the hydraulic fluid flow path with the motor-operated switching valve. Also, the steering assistance power can be finely controlled by controlling the motor or motor-operated valve in accordance with the driving condition.

In the power steering unit of the present invention, it is desirable that the tank, pump, motor, switching valve, and controller are integrated so as to be capable of being attached to and removed from the hydraulic actuator as a unit. In this way, the efficiency of assembly can be improved. Also, a manual type steering apparatus can be converted into a power steering apparatus, only by connecting the output member of a hydraulic actuator for generating steering assistance power to the steering force transmission member of the manual type steering apparatus and by mounting the integrated tank, pump, motor, switching valve, and control unit on the hydraulic actuator.

In the power steering unit according to the present invention, it is desirable that the hydraulic actuator has an oil chamber for generating right steering assistance power and an oil chamber for generating left steering assistance power, and that check valves are provided on hydraulic fluid flow paths between the respective oil chambers and the tank to check the flow of hydraulic fluid from each of the oil chambers to the tank and to allow the flow of the hydraulic fluid from the tank to each of the oil chambers. In this way, when the pressure in the oil chamber of the hydraulic actuator to which hydraulic fluid is to be supplied is negative, hydraulic fluid flows into the oil chamber from the tank through the check valve, so delay in the operation of the hydraulic actuator is prevented and steering assistance power can be rapidly generated.

With the power steering unit according to the present invention, the steering assistance power generated by the hydraulic actuator can be finely controlled in accordance with the steering direction and driving condition at low cost without requiring a complex structure, and it contributes to the conversion of a manual type steering apparatus into a power steering apparatus, and furthermore, good steering feeling can be obtained.

### BRIEF DESCRIPTION OF THE DRAWINGS

[FIG. 1] an explanatory view showing the configuration of a power steering unit according to an embodiment of the present invention
[FIG. 2] a front elevation view of a hydraulic power steering apparatus comprising a power steering unit according to an embodiment of the present invention
[FIG. 3] a drawing showing an example of the relationship between steering torque, vehicle speed, and hydraulic fluid pressure in a power steering unit according to an embodiment of the present invention
[FIG. 4] an explanatory view showing the configuration of a power steering unit according to a first modification of the present invention
[FIG. 5] an explanatory view showing the configuration of a power steering unit according to a second modification of the present invention
[FIG. 6] an explanatory view showing the configuration of a power steering unit according to a third modification of the present invention

### EXPLANATION OF REFERENCE NUMERAL

- 10: hydraulic cylinder
- 13, 14: oil chamber
- 20: tank
- 21: pump
- 22: motor
- 23: switching valve
- 32, 33: check valve
- 40: torque sensor
- 41: speed sensor
- 50: controller
- 60: flow control valve (motor-operated valve)
- 61: electromagnetic opening and closing valve (motor-operated valve)

### BEST MODE FOR CARRYING OUT THE INVENTION

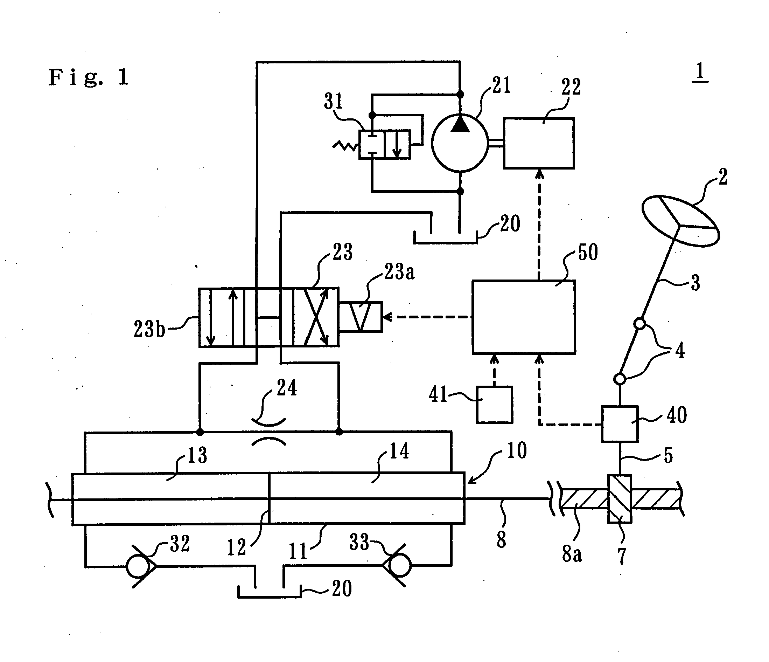

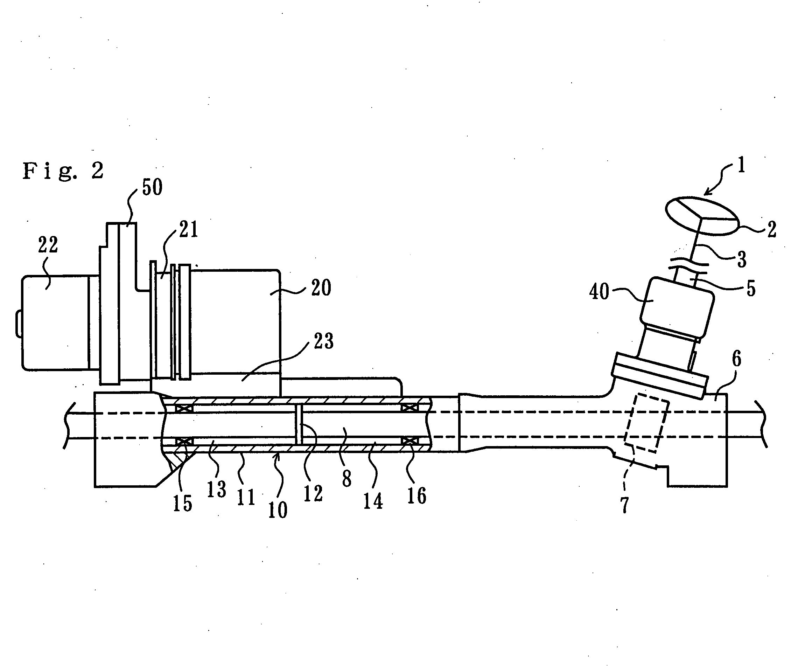

FIGS. 1 and 2 show a rack and pinion type power steering apparatus 1 comprising a power steering unit according to the present invention, including an input shaft 5 connected via a universal joint 4 to a steering shaft 3 which is connected to a steering wheel 2 of a vehicle. The input shaft 5 is supported by a housing 6 through bearings (not shown in the drawings). The input shaft 5 is connected to a pinion 7, and a rack rod 8, on which rack teeth 8a engaging with the pinion 7 are formed, is connected to the vehicle wheels through tie rods and knuckle arms not shown in the drawings. In this way, the rack rod 8 moves due to the rotation of the pinion 7 by the steering operation of the steering wheel 2, and the movement of the rack rod 8 is transmitted to the vehicle wheels to change the steering angle.

The power steering unit includes a hydraulic cylinder 10 as a hydraulic actuator for generating steering assistance power. The hydraulic cylinder 10 includes a cylinder 11 formed integrally with the housing 6 so as to cover the rack rod 8, and a piston 12 integral with the rack rod 8. An oil chamber 13 for generating right steering assistance power and an oil chamber 14 for generating left steering assistance power which are separated by the piston 12 are formed in the space between the inside surface of the cylinder 11 and the outside surface of the rack rod 8, and the ends of the respective oil chambers 13, 14 are sealed by oil seals 15, 16 disposed between the outside surface of the rack rod 8 and the inside surface of the housing 6.

The hydraulic fluid for the hydraulic cylinder 10 is stored in a tank 20, and the hydraulic fluid in the tank 20 is discharged by a pump 21. The pump 21 can be, for example, a vane pump or a gear pump, and the pump 21 is driven by an electric motor 22.

Hydraulic fluid discharged from the pump 21 is delivered to the hydraulic cylinder 10 via a motor-operated switching valve 23. The switching valve 23 of the present embodiment is a solenoid valve having a spool 23b which is moved by a solenoid 23a, and the position of the spool 23b is determined alternatively to a right steering assistance position, a left steering assistance position, or a neutral position. By putting the spool 23b in the right steering assistance position, hydraulic fluid flow paths are switched so that hydraulic fluid is led into the oil chamber 13 for generating right steering assistance power from the pump 21 so that the oil pressure rises, and at the same time hydraulic fluid is led from the oil chamber 14 for generating left steering assistance power to the tank 20. By putting the spool 23b in the left steering assistance position, the hydraulic fluid flow paths are switched so that hydraulic fluid is led into the oil chamber 14 for generating left steering assistance power from the pump 21 so that the oil pressure rises, and at the same time hydraulic fluid is led from the oil chamber 13 for generating right steering assistance power to the tank 20. In this way, the right steering assistance power generating state and left steering assistance power generating state can be selected alternatively by switching the hydraulic fluid flow paths with the switching valve 23. By putting the spool 23b in the neutral position, both oil chambers 13 and 14 are connected to the tank 20.

The two oil chambers 13, 14 of the hydraulic cylinder 10 are connected via a hydraulic fluid flow path having an invariable throttle 24 on the outside of the hydraulic cylinder 10. Sudden changes in the steering assistance power are suppressed by the invariable throttle 24 when there are sudden changes in the hydraulic fluid pressure. The hydraulic fluid flow path having the invariable throttle 24 can be provided in the piston 12 of the hydraulic cylinder 10, or it can be omitted since it is not essential.

The discharge side of the pump 21 and the tank 20 are connected by a hydraulic fluid flow path having a relief valve 20. The relief valve 20 is closed when the pressure in the discharge side of the pump 21 is below a set value, and the valve opens so that hydraulic fluid discharged from the pump 21 returns to the tank 20 when the pressure becomes the set value or more.

Check valves 32, 33 are provided on hydraulic fluid flow paths between the respective oil chambers 13, 14 of the hydraulic cylinder 10 and the tank 20, to check the flow of hydraulic fluid from the oil chambers 13 and 14 to the tank 20, and to allow the flow of hydraulic fluid from the tank 20 to the oil chambers 13, 14.

A torque sensor 40 which detects the steering torque is provided on the input shaft 5 as a means for determining the steering direction. The steering direction is determined in accordance with whether the output value is positive or negative, by setting the output value of the torque sensor 40 to positive value when steering in one of the left and right directions, and setting the output value of the torque sensor 40 to negative value when steering in the other direction. The torque sensor 40 can be a commonly known torque sensor. The torque sensor 40 is also used as a means for determining the magnitude of the steering torque as a driving condition of the vehicle. Also, a vehicle speed sensor 41 is provided as a means for determining the vehicle driving condition.

The motor 22, the switching valve 23, the torque sensor 40, and the vehicle speed sensor 41 are connected to a controller 50. The tank 20, the pump 21, the motor 22, the switching valve 23, and the controller 50 are integrated so as to be capable of being attached to and removed from the hydraulic cylinder 10 as a unit via bolts or the like. In this embodiment, the casing of the controller 50 is mounted so as to be sandwiched between the casing of the motor 22 and the casing of the pump 21, the casing of the switching valve 23 and the tank 20 are mounted on the casing of the pump 21, the rotation shaft of the motor 22 penetrates the casing of the controller 50 and is connected to the rotation shaft of the pump 21, and the hydraulic fluid flow paths and the invariable throttle 24 are formed in the casing of the switching valve 23.

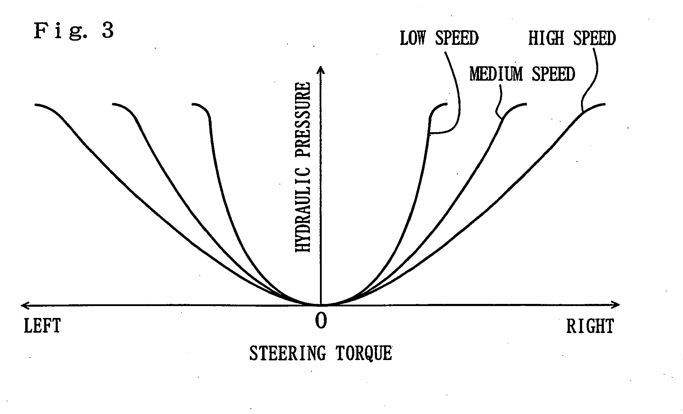

The controller 50 controls the switching valve 23 so that the steering assistance power acts in accordance with the steering direction determined from whether the steering torque detected by the torque sensor 40 is positive or negative, so that the spool 23b moves to the right steering assistance position or the left steering assistance position by the electro-magnetic force of the solenoid 23a. Further, when the steering torque is not detected, the controller 50 moves the spool 23b to the neutral position. Also, the controller 50 controls the motor 22 so that the pressure of the hydraulic fluid discharged from the pump 21 is varied in accordance with the magnitude of the steering torque detected by the torque sensor 40 and the vehicle speed detected by the vehicle speed sensor 41. For example, as shown in FIG. 3, the drive power of the motor 22 is increased to increase the pressure of the hydraulic fluid and steering assistance power as the magnitude of the detected steering torque increases and the detected vehicle speed decreases, and the motor 22 is stopped to cancel the steering assistance power and save energy when the detected steering torque is small and the detected vehicle speed is high.

According to the embodiment as described above, when the steering assistance power is generated by the hydraulic cylinder 10, the direction of action of the steering assistance power can be changed in accordance with the direction of steering by switching the hydraulic fluid flow paths with using the motor-operated switching valve 23, and the steering assistance power can be finely controlled by controlling the electric motor 22 in accordance with the driving conditions. Also, since the tank 10, the pump 21, the motor 22, the switching valve 23, and the controller 50 are integrated so as to be capable of being attached to and removed from the hydraulic cylinder 10 as a unit, the efficiency of assembly can be improved. Also, when the pressure in one of the oil chambers 13, 14 of the hydraulic cylinder 10 to which the hydraulic fluid is to be supplied is negative, hydraulic fluid flows into the oil chamber from the tank 20 through the corresponding one of the check valves 32, 33, so delay in the action of the hydraulic cylinder 10 is prevented and steering assistance power can be rapidly generated.

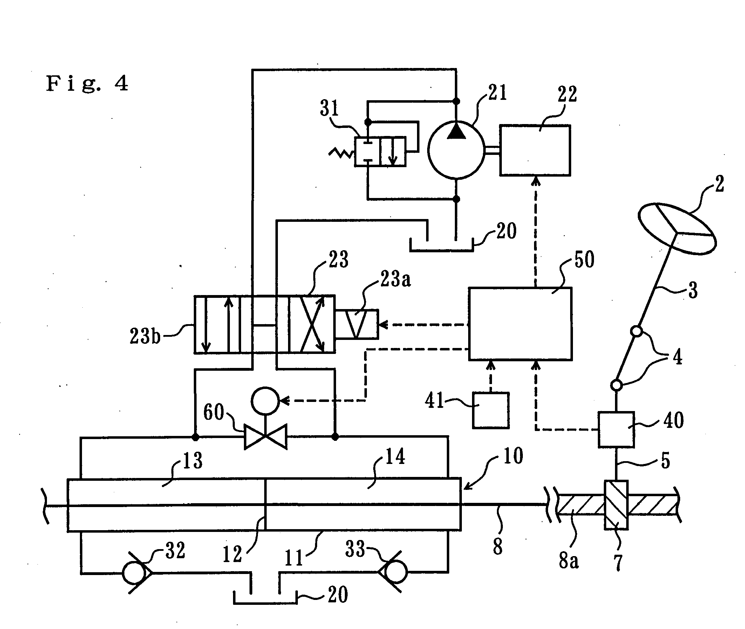

In a first modification shown in FIG. 4, instead of the invariable throttle 24 in the embodiment described above, a motor-operated flow control valve 60 is provided in the flow path between the oil chambers 13, 14 of the hydraulic cylinder 10 as a motor-operated valve connected to the controller 50, so the degree of opening of the hydraulic fluid flow path between the pump 21 and the tank 20 can be varied because the flow control valve 60 serves as a variable throttle. The controller 50 controls the motor 22 and the flow control valve 60 so that the steering assistance power is varied in accordance with the determined driving conditions. For example, when the steering assistance power is being applied, the controller 50 controls the motor 22 so that the drive power increases as the magnitude of the detected steering torque increases, and controls the flow control valve 60 so that the degree of opening of the hydraulic fluid flow path reduces as the detected vehicle speed reduces. Alternatively, when the steering assistance power is being applied, the controller 50 can drive the motor 22 at a constant output power, and control the flow control valve 60 in accordance with the driving conditions, for example, the degree of opening of the hydraulic fluid flow path is reduced by the flow control valve 60 as the magnitude of the detected steering torque increases and the detected vehicle speed reduces. It is desirable that the motor-operated flow control valve 60, the tank 20, the pump 21, the motor 22, the switching valve 23, and the controller 50 are integrated. The rest is the same as the embodiment described above.

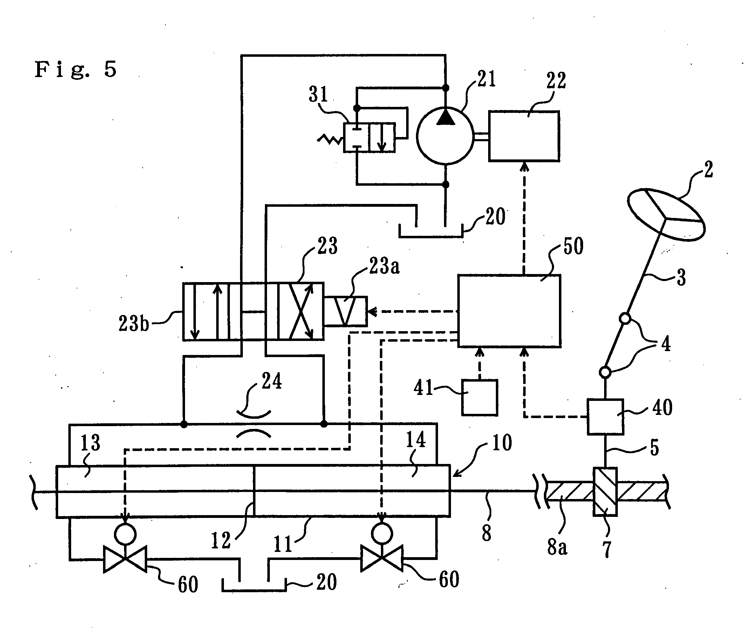

In a second modification shown in FIG. 5, instead of the check valves 32, 33 in the embodiment described above, motor-operated flow control valves 60 are provided as motor-operated valves in the hydraulic fluid flow paths between the oil chambers 13, 14 and the tank 20, so the degree of opening of the hydraulic fluid flow path between the pump 21 and the tank 20 can be varied because each flow control valve 60 serves as a variable throttle. The motor 22 and the flow control valve 60 connected to the high pressure side of the oil chambers 13 and 14 are controlled by the controller 50 in the same way as the first modification, and the flow control valve 60 connected to the low pressure side are controlled so that the degree of opening of the hydraulic fluid flow path is constant, for example, fully open or fully closed. The rest is the same as the embodiment described above.

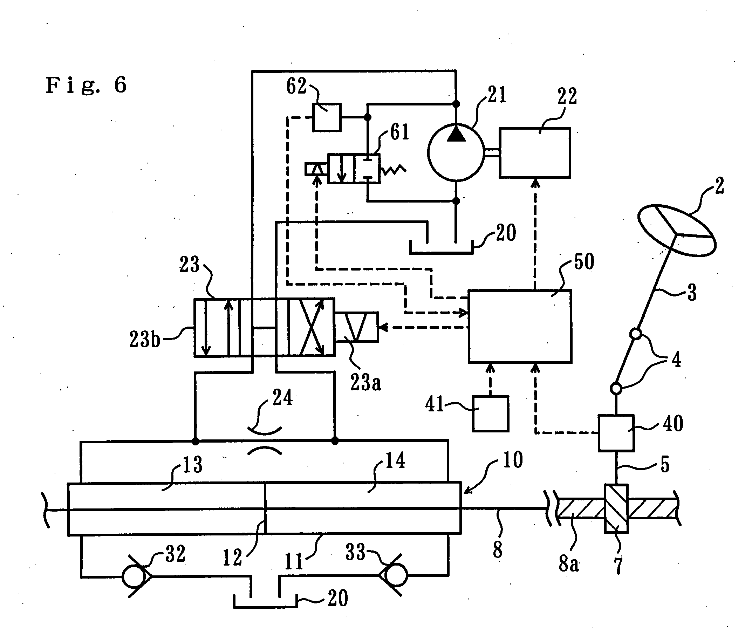

In a third modification shown in FIG. 6, instead of the relief valve 31 in the embodiment described above, an electromagnetic opening and closing valve 61 which acts as a motor-operated valve to open and close the hydraulic fluid flow path, and a pressure sensor 62 to detect the pressure in the discharge side of the pump 21 are provided between the discharge side of the pump 21 and the tank 20, so the degree of opening of the hydraulic fluid flow path between the pump 21 and the tank 20 can be varied. The electro-magnetic control valve 61 serves as a relief valve by controlling the electromagnetic opening and closing valve 61 with the controller 50 so that the pressure detected by the pressure sensor 62 in the discharge side of the pump 21 does not become a preset value or more. Also, the controller 50 controls the motor 22 and the electromagnetic opening and closing valve 61 so that the steering assistance power is varied in accordance with the determined driving conditions. For example, when steering assistance power is being applied, the controller 50 controls the motor 22 so that the drive power increases as the magnitude of the detected steering torque increases, and controls the electromagnetic opening and closing valve 61 so that the hydraulic fluid discharge pressure of the pump 21 increases as the detected vehicle speed reduces. Alternatively, when steering assistance power is being applied, the controller 50 can drive the motor 22 at a constant output power, and control the electromagnetic opening and closing valve 61 in accordance with the driving conditions, for example, the electromagnetic opening and closing valve 61 is controlled so that the detected pressure in the discharge side of the pump 21 increases as the magnitude of the detected steering torque increases and the detected vehicle speed reduces. The rest is the same as the embodiment described above.

The present invention is not limited to the above embodiments. The driving condition to be determined is not limited to steering torque or vehicle speed, for example, the steering angle, steering velocity, or steering acceleration can be determined as a driving condition, and the steering assistance power can be controlled so that the steering assistance power increases as the magnitude of the steering angle, steering velocity, or steering acceleration increases. Also, a steering angle sensor can be provided, and the steering direction can be determined from its detection value. Also, a manual type steering apparatus can be converted into a power steering apparatus by installing the power steering unit of the present invention, for example, by connecting the piston rod of the hydraulic cylinder to the rack of a manual type rack and pinion steering apparatus, fixing the cylinder tube of the hydraulic cylinder to the vehicle body, and mounting the integrated tank, pump, electric motor, switching valve, and controller on the hydraulic cylinder.

## Claims

1. A power steering unit, comprising:
a hydraulic actuator for generating steering assistance power;
a tank for storing hydraulic fluid for said hydraulic actuator;
a pump for discharging the hydraulic fluid stored in said tank;
an electric motor for driving said pump;
a motor-operated switching valve which switches the flow path of the hydraulic fluid to said hydraulic actuator so that a state of generating right steering assistance power or a state of generating left steering assistance power is alternatively selected; and
a controller which controls said switching valve so that steering assistance power acts in accordance with the determined direction of steering, and controls said motor so that the pressure of the hydraulic fluid discharged from said pump is varied in accordance with the determined driving condition.

2. A power steering unit, comprising:
a hydraulic actuator for generating steering assistance power;
a tank for storing hydraulic fluid for said hydraulic actuator;
a pump for discharging the hydraulic fluid stored in said tank;
an electric motor which drives said pump;
a motor-operated switching valve which switches the flow path of the hydraulic fluid to the hydraulic actuator so that a state of generating right steering assistance power or a state of generating left steering assistance power is alternatively selected;
a motor-operated valve which varies the degree of opening of a hydraulic fluid flow path between the discharge side of said pump and
said tank; and
a controller which controls said switching valve so that steering assistance power acts in accordance with the determined direction of steering, and controls said motor-operated valve so that the steering assistance power is varied in accordance with the determined driving condition.

3. The power steering unit according to claim 2, wherein said motor is controlled by said controller so that the pressure of the hydraulic fluid discharged from said pump is varied in accordance with the determined driving condition.

4. The power steering unit according to any of claims 1 to 3, wherein said tank, said pump, said motor, said switching valve, and said controller are integrated so as to be capable of being attached to and removed from said hydraulic actuator as a unit.

5. The power steering unit according to any of claims 1 to 4, wherein said hydraulic actuator has an oil chamber for generating right steering assistance power and an oil chamber for generating left steering assistance power, and check valves are provided on hydraulic fluid flow paths between the respective oil chambers and said tank to check the flow of the hydraulic fluid from each of the oil chambers to said tank and to allow the flow of the hydraulic fluid from said tank to each of the oil chambers.
